# EUROPÄISCHE PATENTSCHRIFT

(11) **EP 1 851 058 B1**
(45) Veröffentlichungstag und Bekanntmachung des Hinweises auf die Patenterteilung: **01.07.2009**
(21) Anmeldenummer: 06722998.9
(22) Anmeldetag: 01.02.2006
(51) Int. Cl.: B41J 2/165, B41J 2/155, B41J 11/00, G06K 15/00, H04N 1/00

(54) **TINTENSTRAHLDRUCKVORRICHTUNG UND VERFAHREN ZUM DRUCKEN VON MEHRFARBIGEN BILDERN**
INKJET PRINTING DEVICE AND METHOD FOR PRINTING MULTI-COLOURED IMAGES
DISPOSITIF D'IMPRESSION A JET D'ENCRE ET PROCEDE D'IMPRESSION D'IMAGES MULTICOLORES

(30) Priorität: 08.02.2005 AT 2032005; 10.08.2005 AT 13422005
(43) Veröffentlichungstag der Anmeldung: 07.11.2007
(73) Patentinhaber: DURST PHOTOTECHNIK A.G., 39042 Brixen (IT)
(72) Erfinder: OBERTEGGER, Franz, I-39042 Brixen (IT); GANDINI, Mario, I-39042 Brixen (IT); STOLL, Thomas, I-39030 Gsies (IT); NIEDERBACHER, Andrä, I-39031 Bruneck (IT)
(74) Vertreter: Secklehner, Günter
(86) Internationale Anmeldenummer: PCT/EP2006/000865
(87) Internationale Veröffentlichungsnummer: WO 2006/084614

(56) Entgegenhaltungen:
- EP-A- 0 461 759
- EP-A- 0 558 219
- EP-A- 0 613 779
- EP-A- 0 671 274
- EP-A- 1 070 592
- EP-A- 1 142 717
- EP-A- 1 388 422
- EP-A- 1 393 912
- EP-A- 1 442 892
- DE-A1- 19 929 320
- US-A- 3 177 568
- US-A- 4 488 830
- US-A- 4 847 638
- US-A- 5 270 738
- US-A- 5 790 146
- US-A- 6 155 669
- US-A1- 2003 099 494
- US-A1- 2004 075 702
- US-A1- 2004 085 428
- US-A1- 2004 109 047
- US-A1- 2004 119 781
- US-A1- 2004 239 710
- US-B1- 6 305 856
- US-B1- 6 478 402
- US-B1- 6 499 841

## Beschreibung

Die Erfindung betrifft eine Tintenstrahldruckvorrichtung und ein Verfahren zum Drucken von mehrfarbigen Bildern, entsprechend den Merkmalen des Oberbegriffs der Ansprüche 1, 17 und 30.

Es sind bereits Tintenstrahldruckvorrichtungen zum Drucken mehrfarbiger Bilder bekannt, bei denen aus mehreren Druckköpfen zusammengesetzte Druckkopfanordnungen verwendet werden, die zu einer gesamten Druckbereichsbreite zusammengesetzt sind und während des Druckvorganges relativ zu einer Transporteinrichtung, auf der zu bedruckende Druckteile transportiert werden, stationär angeordnet sind. Eine derartige Druckvorrichtung ist beispielsweise in dem Dokument EP 1 038 689 B1 beschrieben.

Bei dem Tintenstrahl-Drucker gemäß dem Dokument US 2004/0085428 A1 ist vorgesehen, dass dieser einen Druckkopf, der eine einzige Reihe von Düsenöffnungen, die die gesamte Druckbereichsbreite überspannen, aufweist. Weiteres ist von diesem Tintenstrahl-Drucker bekannt, dass eine Bilddatenschaltung zur Ansteuerung der Druckköpfe mit einer Pufferschaltung ausgebildet ist, wobei in der Pufferschaltung mehre Teilpüffer, jeweils einer für die einzelnen Farben, vorgesehen sind.

Besonders bei der Anwendung derartiger Tintenstrahldruckvorrichtungen in Verbindung mit industriellen Herstellungsprozessen bzw. industriellen Produktionsanlagen, wo derartige Tintenstrahldruckvorrichtungen Bestandteil eines kontinuierlichen Produktionsprozesses sind, ist eine hohe Zuverlässigkeit und Ausfallsicherheit dieser Tintenstrahldruckvorrichtungen erforderlich.

Die US 6,155,669 A offenbart eine Tintenstrahldruckvorrichtung zum Drucken mehrfarbiger Bilder mit einer im Wesentlichen horizontal angeordneten Transporteinrichtung zum Bewegen von darauf liegenden, zu bedruckenden Druckteilen in einer Vorschubrichtung und mit einer oberhalb der Transporteinrichtung angeordneten Druckkopfanordnung, die während des Druckvorganges relativ zur Transporteinrichtung stationär angeordnet ist, wobei die Druckkopfanordnung aus mehreren Druckköpfen mit jeweils mehreren in einer Düsenreihe angeordneten Düsen gebildet ist, und wobei die Düsenreihen eine senkrecht bezüglich der Vorschubrichtung gemessene Druckbereichweite aufweisen, durch die eine gesamte Druckbereichsbreite der Druckkopfanordnung entsprechend der Anzahl der Druckköpfe gebildet ist.

Ähnliche Tintenstrahldruckvorrichtungen sind auch aus der US 5,790,146 A, der US 6,478,402 B oder der EP 1 393 912 A bekannt.

Es ist die Aufgabe der vorliegenden Erfindung eine Tintenstrahldruckvorrichtung zum Drucken von mehrfarbigen Bildern derart zu verbessern, dass der erforderliche Wartungsaufwand reduziert werden kann.

Die Aufgabe der Erfindung wird durch eine Tintenstrahldruckvorrichtung entsprechend den Merkmalen des Anspruchs 1 gelöst. Von Vorteil ist dabei, dass der Zeitbedarf zur Wartung der Druckköpfe der Druckkopfanordnung sehr gering gehalten werden kann.

Vorteilhaft sind auch die Weiterbildungen der Tintenstrahldruckvorrichtung gemäß den Ansprüchen 2 bis 16.

Zum besseren Verständnis der Erfindung wird diese anhand der nachfolgenden Figuren näher erläutert.

Es zeigen in schematisch vereinfachter Darstellung:
- Fig. 1: eine Übersichtsdarstellung der Tintenstrahldruckvorrichtung;
- Fig. 2: die Unterseite der Druckkopfanordnung gemäß Fig. 1 mit den darin angeordneten Druckköpfen;
- Fig. 3: eine Draufsicht auf die Düsenspüleinrichtung gemäß Fig. 1;
- Fig. 4: einen Ausschnitt der Tintenstrahldruckvorrichtung gemäß Fig. 1 mit der Einrichtung der Lagekorrektur der Druckteile in Draufsicht;
- Fig. 5: ein Blockschaltbild des Datenflusses zwischen dem Bildrechner und der Druckkopfanordnung;
- Fig. 6: eine Pufferschaltung der Druckkopfanordnung gemäß Fig. 5 zur Zwischenspeicherung von Bildinformationsdaten einer zu druckenden Farbe;
- Fig. 7: ein Schema zur Auswahl des Bildausschnitts einer Bildvorlage zum Bedrucken von Fliesen;
- Fig. 8: ein Schema zur Auswahl einer geordneten Folge unterschiedlicher Bildausschnitte aus einer Bildvorlage zum Bedrucken von Fliesen;
- Fig. 9: ein Schema einer weiteren geordneten Auswahl von Bildausschnitten aus einer Bildvorlage;
- Fig. 10: ein Schema einer zufälligen Auswahl von Bildausschnitten aus einer Bildvorlage,
- Fig. 11: ein Schema einer weiteren zufälligen Auswahl von Bildausschnitten aus einer Bildvorlage mit einer Drehung der Bildausschnitte um 90 °;
- Fig. 12: ein Schema einer weiteren zufälligen Auswahl von Bildausschnitten aus einer Bildvorlage mit einer beliebigen Drehung der Bildausschnitte;
- Fig. 13: ein Schema einer Betriebsweise der Tintenstrahldruckvorrichtung unter Verwendung von mehrerer unterschiedlichen Bildvorlagen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

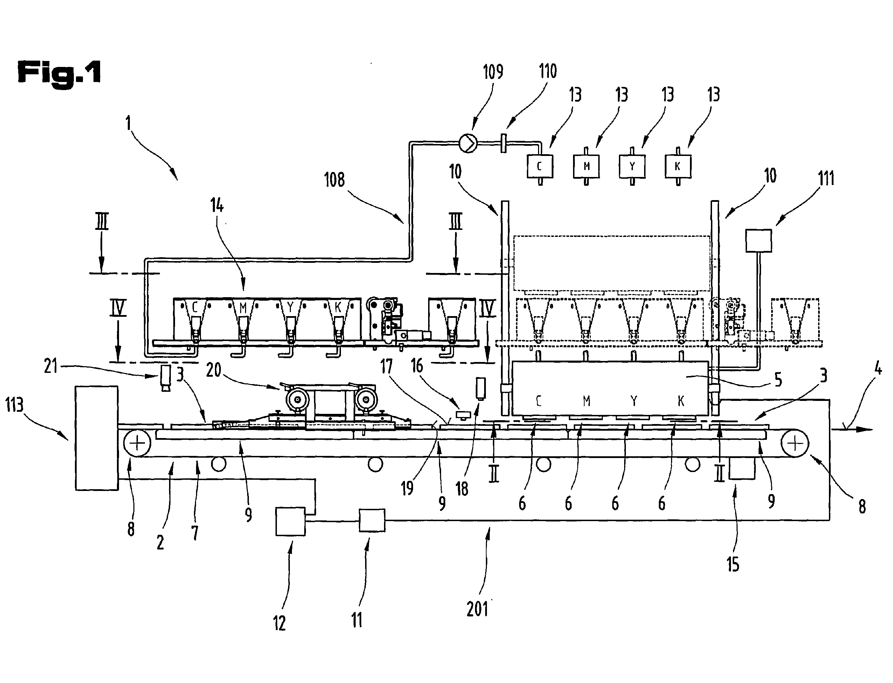

Fig. 1 zeigt eine Übersichtdarstellung der Tintenstrahldruckvorrichtung 1 mit schematisch und vereinfacht dargestellten Einzelbestandteilen.

Die Tintenstrahldruckvorrichtung 1 weist eine im Wesentlichen horizontal angeordnete Transporteinrichtung 2 zum Bewegen von darauf liegenden zu bedruckenden Druckteilen 3 in einer Vorschubrichtung 4 (in Fig. 1 von links nach rechts) auf. Über der Transporteinrichtung 2 befindet sich eine Druckkopfanordnung 5 mit Druckköpfen 6, durch die die darunter vorbeibewegten Druckteile 3 mit Tinte bedruckt werden.

Die Transporteinrichtung 2 wird vorzugsweise durch ein endloses Förderband 7 gebildet, das über zumindest zwei Umlenkrollen 8 geführt bzw. angetrieben wird. Der in Vorschubrichtung 4 bewegte obere Abschnitt des Förderbandes 7 wird durch über eine oder mehrere Führungsplatten 9 an seiner Unterseite gestützt. In dem das Förderband 7 über die horizontal und fluchtend ausgerichteten Führungsplatten 9 gleitend gezogen wird, wird eine entsprechend gleichmäßige horizontale Bewegung der Druckteile 3 in Vorschubrichtung 4 erreicht.

Die Druckkopfanordnung 5 weist zu jeder Farbe eine Mehrzahl von Druckköpfen 6 auf, sodass die gesamte Breite des Druckmediums bzw. der Druckteile auf einmal bedruckt werden kann, ohne dass sich die Druckkopfanordnung 5 in bezüglich der Vorschubrichtung 4 seitlicher Richtung bewegen muss. D.h. die Druckkopfanordnung 5 ist in seitlicher Richtung feststehend angeordnet. Durch vertikal ausgerichtete Führungen 10 kann die Druckkopfanordnung 5 in Richtung auf das Förderband 7 abgesenkt bzw. durch Anheben von diesen entfernt werden.

Zur Ansteuerung der Druckköpfe 6 der Druckkopfanordnung 5 werden die Bilddaten eines zu druckenden Bildes durch einen Bildrechner 11 in Steuersignale für die Druckköpfe 6 umgewandelt. Zur Steuerung der gesamten Tintenstrahldruckvorrichtung ist darüber hinaus eine Steuereinrichtung 12 vorgesehen. Die Steuerungseinrichtung 12 weist eine Software zur Steuerung der Tintenstrahldruckvorrichtung auf, sowie auch der Bildrechner 11 eine Software zur Bilddatenverarbeitung aufweist.

Gemäß diesem Ausführungsbeispiel ist das Drucken von farbigen Bildern mit den Farben Cyan, Magenta, Yellow und Karo bzw. Black vorgesehen und werden die Druckköpfe 6 bzw. die Druckkopfanordnung 5 aus entsprechenden Tanks 13 mit Tinte versorgt.

Die Tintenstrahldruckvorrichtung 1 kann selbstverständlich auch für eine andere Anzahl als vier unterschiedliche Farben ausgerüstet sein.

Die Tintenstrahldruckvorrichtung 1 weist weiters eine Düsenspüleinrichtung 14, die nach Anheben der Druckkopfanordnung 5 aus einer Parkposition unter die Druckkopfanordnung 5 verschoben werden kann (gestrichelt eingezeichnet). Zum Lösen evt. vorliegender Verstopfungen von Düsen der Druckköpfe 6 wird durch alle Düsen Tinte gepresst, die durch die Düsenspüleinrichtung 14 aufgefangen wird.

Vorzugsweise im Bereich des unteren Abschnittes des Förderbandes 7 der entgegen der Vorschubrichtung 4 bewegt wird, ist eine Reinigungseinrichtung 15 zur Reinigung des Förderbandes 7 angeordnet. Damit können Tintenreste, die auf das Förderband 7 gelangt sind, entfernt werden. Die Reinigung mit der Reinigungseinrichtung 15 kann beispielsweise durch Abstreifen bzw. Absaugen noch nicht eingetrockneter Tintenreste erfolgen. Die Reinigungswirkung kann zusätzlich unterstützt werden, indem das Förderband mit einem Reinigungsmittel besprüht wird und dadurch eingetrocknete Tintenreste gelöst werden.

Durch einen Sensor 16 wird die vertikale Lage einer Oberseite 17 des Druckteiles 3 bzw. die Dicke des Druckteiles detektiert, sodass durch die Steuervorrichtung 12 die vertikale Position der Druckkopfanordnung 5 bzw. der Abstand der Druckkopfanordnung 5 von der Oberseite 17 des Druckteiles 3 automatisch eingestellt werden kann. Ein weiterer Sensor 18 der ebenfalls am eingangsseitigen Bereich der Transporteinrichtung 2 der Druckkopfanordnung 5 vorgeordnet ist, ist vorgesehen, um eine Vorderkante 19 eines Druckteiles 3 zu detektieren, sodass der Druckvorgang der Druckkopfanordnung 5 zeitgerecht gestartet werden kann.

Im Eingangsbereich der Transporteinrichtung 2 befindet sich außerdem eine Einrichtung 20 zur Lagekorrektur der Druckteile 3, durch die die Ausrichtung der Druckteile 3 auf dem Förderband 7 in eine definierte Lage gebracht wird. Alternativ dazu kann auch eine Kamera 21 vorgesehen sein, durch die in Verbindung mit einer automatischen Bilderkennung die Lage als auch die Ausrichtung des auf das Förderband 7 liegenden Druckteiles 3 detektiert wird und diese Information bei der Berechnung der Bilddaten durch den Bildrechner 11 berücksichtigt wird.

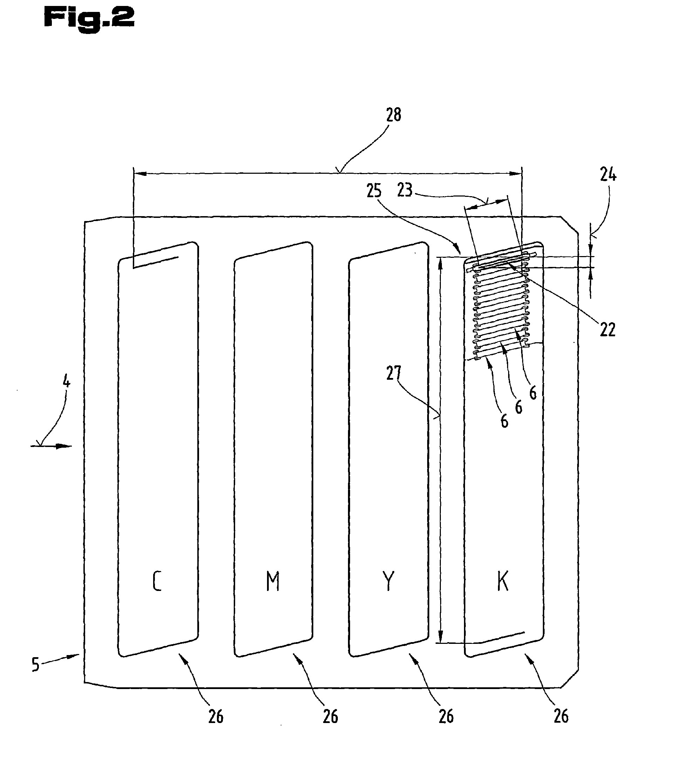

Die Fig. 2 zeigt die Unterseite der Druckkopfanordnung 5 gemäß Fig. 1, mit den darin angeordneten Druckköpfen 6.

Jeder der Druckköpfe 6 weist eine durch einen Vielzahl nebeneinander liegender und linear ausgerichteter Düsen gebildete Düsenreihe 22 mit einer Düsenreihenlänge 23 auf. Die Druckköpfe 6 bzw. deren Düsenreihen 22 sind bezüglich der Vorschubrichtung 4 schräg bzw. geneigt angeordnet, sodass jede der Düsenreihen 22 eine senkrecht bezüglich der Vorschubrichtung 4 gemessene Druckbereichbreite 24 der Düsenreihe 22 aufweist, die deutlich kleiner ist, als die Düsenreihenlängen 23. Damit kann durch Verwendung von Druckköpfen 6 mit einer niedrigen Auflösung bzw. einer geringen Dichte von Düsen in der Düsenreihe 22 eine wesentlich höhere Auflösung bezüglich der zur Vorschubrichtung 4 senkechten Richtung erreicht werden.

Ohne Einschränkung der Allgemeinheit sind in der beschriebenen Ausführungsform jeweils neun Druckköpfe 6 zu einem Druckkopfmodul 25 zusammengesetzt (aus Gründen der Übersichtlichkeit, ist in Fig. 2 nur ein solches Druckkopfmodul 25 dargestellt). Mehrere solcher Druckkopfmodule 25 (in der beschriebenen Ausführungsform vier Druckkopfinodule 25) bilden gemeinsam eine Druckkopfreihe 26 zum Drucken jeweils einer der zu druckenden Farben. Die Druckköpfe 6 sind dabei so angeordnet, dass die Druckbereichsbreiten 24 der Düsenreihen 22 zweier benachbarter Düsenreihen 22 lückenlos aneinander anschließen, sodass sich eine gesamte Druckbereichsbreite 27 der Druckkopfreihe 26 entsprechend der Anzahl der Druckköpfe 6 ergibt.

Für jede der zu druckenden Farben ist eine Druckkopfreihe 26 vorgesehen. Gemäß diesem Ausführungsbeispiel sind für Druckkopfreihen 26 bezüglich der Vorschubrichtung 4 hintereinander angeordnet und erstrecken sich die Düsen der Druckkopfreihen 26 somit über eine Druckbereichslänge 28.

In der beschriebenen Ausführungsform werden vorzugsweise Piezzo-Inkjet-Druckköpfe für die Druckköpfe 6 verwendet und können damit Druckbereichsbreiten 27 von mehr als 50 cm erreicht werden, wobei Auflösungen im Bereich von 200 bis 800 dpi möglich sind.

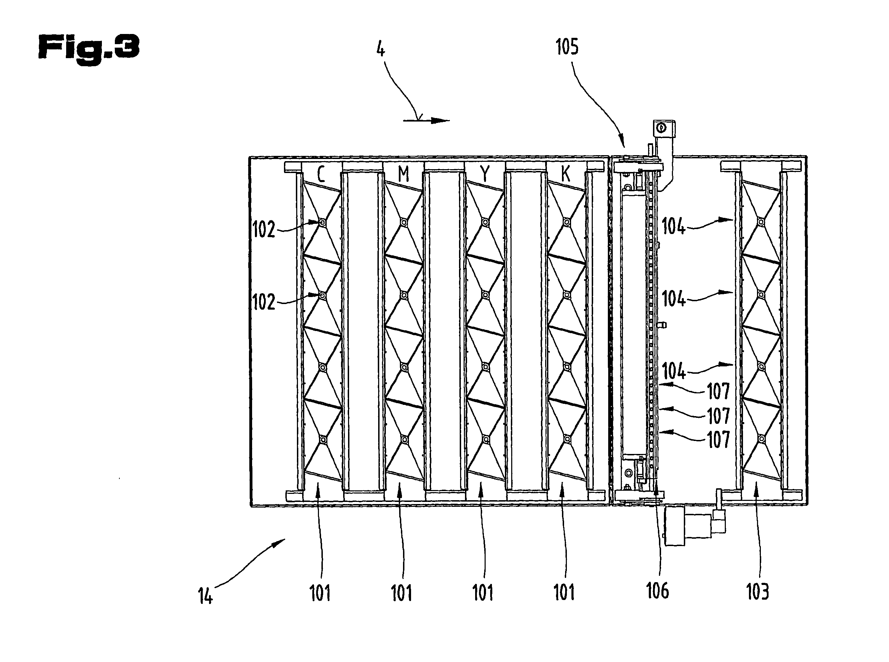

Die Fig. 3 zeigt eine Draufsicht auf die Düsenspüleinrichtung 14 gemäß Fig. 1.

Die Düsenspüleinrichtung 14 umfasst zunächst vier Trichterreihen 101 mit jeweils vier Auf fangtrichtern 102. Form und Größe der Auffangfläche dieser Auffangtrichter 102 ist so gestaltet, dass alle Düsen der Druckköpfe 6 eines Druckkopfinoduls 25 (siehe Fig. 2) von einem Auffangtrichter 102 abgedeckt werden können, wenn die Düsenspüleinrichtung 14 unter der Druclckopfanordnung 5 positioniert wird. Die Abstände der Trichterreihen 101 bezüglich der Vorschubrichtung 4 sind so bemessen, dass alle Druckkopfreihen 26 gleichzeitig über den Trichterreihen 101 positioniert werden können (Fig. 1).

Die Düsenspüleinrichtung 14 weist sodann eine weitere Trichterreihe 103 auf, deren Auffangtrichter 104 bezüglich Form und Größe ebenfalls so bemessen sind, dass die Düsenreihen 22 eines Druckkopfmoduls 25 zur Gänze abgedeckt werden, wenn ein Druckkopfmodul 25 darüber positioniert wird.

Schließlich umfasst die Düsenspieleinrichtung 14 eine Düsenreinigungseinrichtung 105. Diese besteht vorzugsweise aus einem Absaugbalken 106 mit Absaugdüsen 107. Der Absaugbalken 6 bzw. die daran angeordneten Absaugdüsen 7 sind in einer geraden Reihe und senkrecht bezüglich der Vorschubrichtung 4 angeordnet. Die Anzahl der Absaugdüsen 7 entspricht der Anzahl der Drückköpfe 6 in einer Druckkopfreihe 26. Der relative Abstand zweier benachbarter Absaugdüsen ist gleich dem Abstand zweiter benachbarter Druckköpfe 6 bzw. gleich der Druckbereichsbreite 24 der Düsenreihe 22.

Zum Reinigen der Düsen der Druckköpfe 6 wird der Druckvorgang unterbrochen, indem die Transporteinrichtung 2 bzw. das Förderband 7 angehalten wird (Fig. 1). Die Druckkopfanordnung 5 wird entlang der Führungen 10 in vertikaler Richtung soweit angehoben, dass die Düsenspüleinrichtung 14 in horizontaler Richtung, d.h. im wesentlichen parallel zur Vorschubrichtung 4 unter die Druckkopfanordnung 5 geschoben werden kann. Die Düsenspüleinrichtung 14 wird zunächst so positioniert, dass sich jeweils eine Trichterreihe 101 unter einer der Druckkopfreihen 26 befindet und die Düsenöffnungen der entsprechenden Düsenreihen 22 (Fig. 2) durch die Auffangfläche der Auffangtrichter 102 abgedeckt werden. Sodann werden die Druckköpfe 6 durch die Steuereinrichtung 12 derart angesteuert, dass durch alle Düsen Tinte ausgestoßen wird. Die Düsen der Druckköpfe 6 werden derart gespült, sodass sich möglicherweise gebildete Verstopfungen lösen können und entfernt werden. Die durch die Düsen ausgestoßene Tinte wird in den Auffangtrichtern 102 gesammelt und kann nach entsprechender Reinigung an den jeweiligen Tank 13 der entsprechenden Farbe zurückgeführt werden.

Die einzelnen Trichterreihen sind dazu jeweils durch separate Leitungen 108 über eine Pumpe 109 und eine Tintenreinigungseinrichtung 110, die beispielsweise durch einen Filter gebildet sein kann, mit dem entsprechenden Tank 13 verbunden. Indem die bei dem Spülvorgang ausgestoßene Tinte jeweils durch separate Trichterreihen 103 aufgefangen wird, ist es möglich, die Tinte einem Recycling zuzuführen und Verluste von wertvoller Tinte weitestgehend zu vermeiden.

Zur Erzielung einer noch besseren Reinigungswirkung bei dem Düsenspülen kann vorgesehen werden, dass durch die Düsen der Druckköpfe 6 eine Reinigungsflüssigkeit hindurchgeführt bzw. ausgestoßen wird. Dazu wird nach entsprechender Ansteuerung durch die Steuereinrichtung 12 eine Reinigungsflüssigkeit aus einem Tank 111 angesaugt und durch die Düsen jeweils jener Druckkopfreihe 26 geführt, unterhalb der gerade die weitere Trichterreihe 103 der Düsenspüleinrichtung 14 positioniert ist. Diese Trichterreihe 103 ist somit zum Auffangen und Ableiten der Resttinte bzw. der Reinigungsflüssigkeit in einen Abfalltank (nicht dargestellt) vorgesehen. Ein Vermischen mit der durch die Trichterreihen 101 abgeführten und wieder verwendeten Tinte wird somit vermieden.

Insbesondere bei dem Spülvorgang, bei dem Tinte der jeweiligen Farbe durch die Düsen der Druckköpfe 6 in ihre entsprechenden Trichterreihen 101 ausgestoßen wird, kann es dazu kommen, dass Tintentropfen im Bereich der Düsenöffnungen der Druckköpfe 6 haften bleiben. Um diese Tintentropfen von den Düsenköpfen 6 zu entfernen, wird die Düsenreinigungseinrichtung 105 durch entsprechendes Verschieben der Düsenspüleinrichtung 14 an die Düsenreihen 22 der Druckköpfe 6 herangeführt bzw. darunter positioniert. Der Absaugbalken 6 mit den Absaugdüsen 7 ist an der Düsenspüleinrichtung 14 verschiebbar angeordnet, sodass eine seitliche Bewegung des Absaugbalkens 6, d.h. senkrecht bezüglich der Vorschubrichtung 4 im Ausmaß der Druckbereichsbreite 24 einer Düsenreihe 22 möglich ist. Der Absaugbalken 6 verfügt dazu über einen Mitnahmezapfen bzw. eine Mitnehmerrolle, die mit einer Führungsbahn (nicht dargestellt) jeweils einer Druckkopfreihe 26 in Eingriff gebracht werden kann und derart erreicht wird, dass bei einer Bewegung der Düsenspüleinrichtung 14 parallel zur Vorschubrichtung 4 die einzelnen Absaugdüsen 7 alle Düsen der schräg ausgerichteten Düsenreihen 22 der Druckköpfe 6 überstreichen. Die Absaugdüsen 7 sind vorzugsweise in vertikaler Richtung derart positioniert, dass ein relativer Abstand zu den Düsenreihen 22 von nur wenigen Zehntel mm vorhanden ist. Durch Anlegen eines Unterdrucks an die Absaugdüsen 7, wird durch die Luftströmung im Bereich des Zwischenraums zwischen der Absaugdüse 7 und der Düsenreihe 22 die restliche Tinte mitgerissen und derart entfernt.

Alternativ zu der Düsenreinigungseinrichtung 105 kann auch eine Abwischeinrichtung mit einem über eine Umlenkwalze umlaufenden und mit einem Reinigungsmittel getränkten Band das an die Düsenreihen 22 herangeführt wird bzw. an die Druckköpfe 6 gedrückt wird, verwendet werden. Eine derartige Abwischeinrichtung ist beispielsweise in der österreichischen Patentanmeldung A 2099/2003 des gleichen Anmelders geoffenbart, deren Inhalt hiermit zum Bestandteil der gegenständlichen Anmeldung erklärt wird.

Die durch die Düsenspüleinrichtung 14 gebildete Reinigungseinrichtung erlaubt die Durchführung von Reinigungszyklen mit einer Dauer von lediglich 1 bis 2 min. Für den Fall, dass die Tintenstrahldruckeinrichtung als Bestandteil eines kontinuierlichen Produktionsprozesses eingesetzt wird, ist vorgesehen, dass für die Dauer des Reinigungszyklus während das Förderband 7 angehalten wird, weitere ankommende Druckteile 3 in einem Zwischenspeicher 113 umgeleitet werden, aus dem sie nach dem Ende des Reinigungszyklus wieder entnommen und der Transporteinrichtung 2 zugeführt werden. Mit der Düsenspüleinrichtung 14 ist jedenfalls möglich den Reinigungszyklus in weniger als 5 min durchzuführen. Die Einleitung dieser Maßnahme wird von der Steuereinrichtung 12 durch Ansteuerung des Zwischenspeichers 113 automatisiert vorgenommen. Es ist insbesondere auch vorgesehen, dass die Steuereinrichtung 11 auf dem Herstellungsprozess, deren Bestandteil die Tintenstrahldruckvorrichtung 1 bildet, Einfluss nimmt, als beispielsweise durch die Steuereinrichtung 12 die Geschwindigkeit vor- bzw. nachgeordneter Förderbänder für die Druckteile 3 verringert bzw. bedarfsweise erhöht werden kann. Die Steuereinrichtung 12 kann auch die Funktion einer Gesamtsteuereinrichtung einer derartigen Produktionsanlage übernehmen.

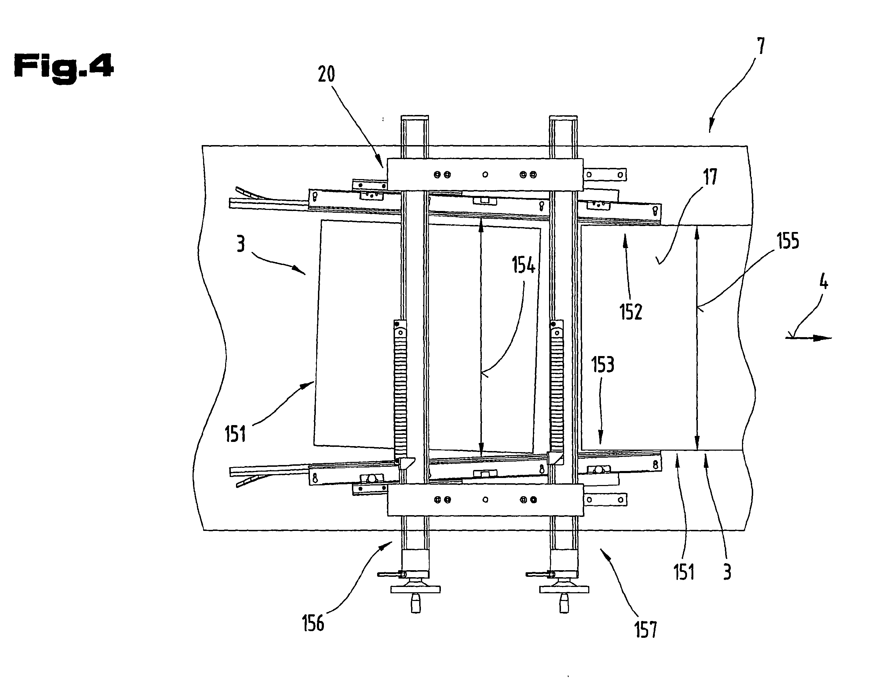

Die Fig. 4 zeigt ein Detail der Tintenstrahldruckvorrichtung 1 gemäß Fig. 1 mit der Einrichtung 20 zur Lagekorrektur der Druckteile 3 in Draufsicht.

Die Einrichtung 20 kann verwendet werden zum Ausrichten von Druckteilen 3, die zumindest zwei zueinander parallele Seitenkanten aufweisen. Dies ist beispielsweise der Fall, wenn als Druckteile 3 keramische Fliesen 151 mit der üblicherweise rechteckigen Form verwendet werden. Die Einrichtung 20 zur Lagekorrektur der Druckteile 3 weist eine linke und eine rechte Führungsleiste 152, 153 auf, die bezüglich der Vorschubrichtung 4 schräg angeordnet sind, sodass ein Abstand 154 zwischen den Führungsleisten 152, 153 sich allmählich verringert bis er an der engsten Stelle der Führungsleisten 152, 153 gleich ist einer Breite 155 der Druckteile 3 bzw. Fliesen 151. Ein Druckteil 3 bzw. eine Fliese 151, die zunächst schräg auf das Förderband 7 im Eingangsbereich der Transporteinrichtung 2 aufgelegt wird, tritt in dem es durch das Förderband 7 in Transportrichtung 4 weiterbewegt wird, in Kontakt mit einer der Führungsleisten 152, 153 und wird seine Lage allmählich derart verändert, dass die Seitenkanten der Fliese 151 schließlich parallel zur Vorschubrichtung 4 ausgerichtet sind. Die Führungsleisten 152, 153 sind in einem geringen Abstand über dem Förderband gehaltert (Fig. 1) und können über zwei Stellschlitten 156, 157, an denen sie verschiebbar befestigt sind, der Abstand 154 zwischen und die Neigung der Führungsleisten 152, 153 eingestellt werden.

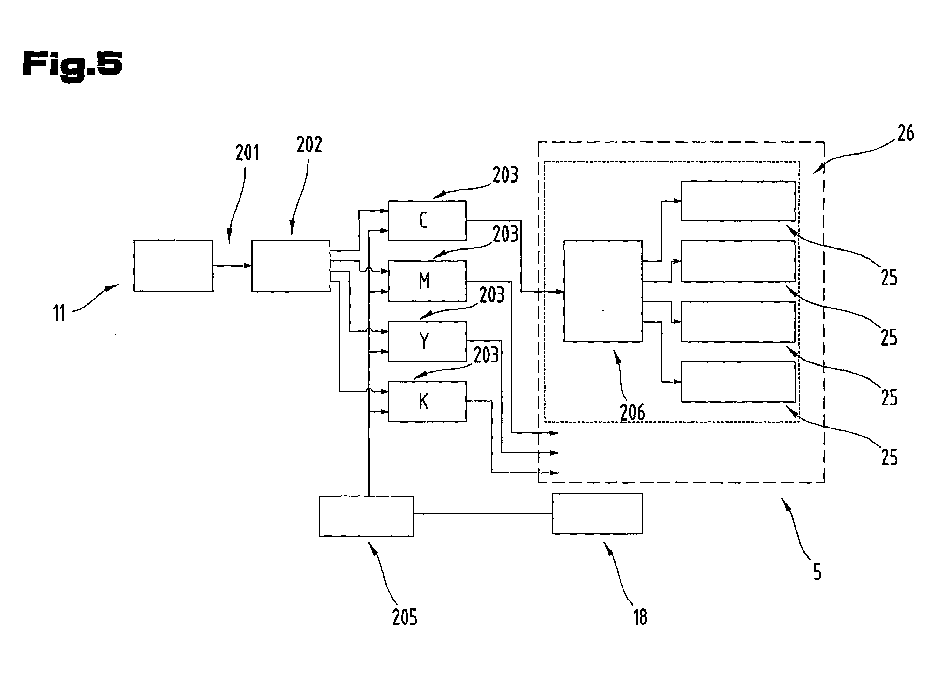

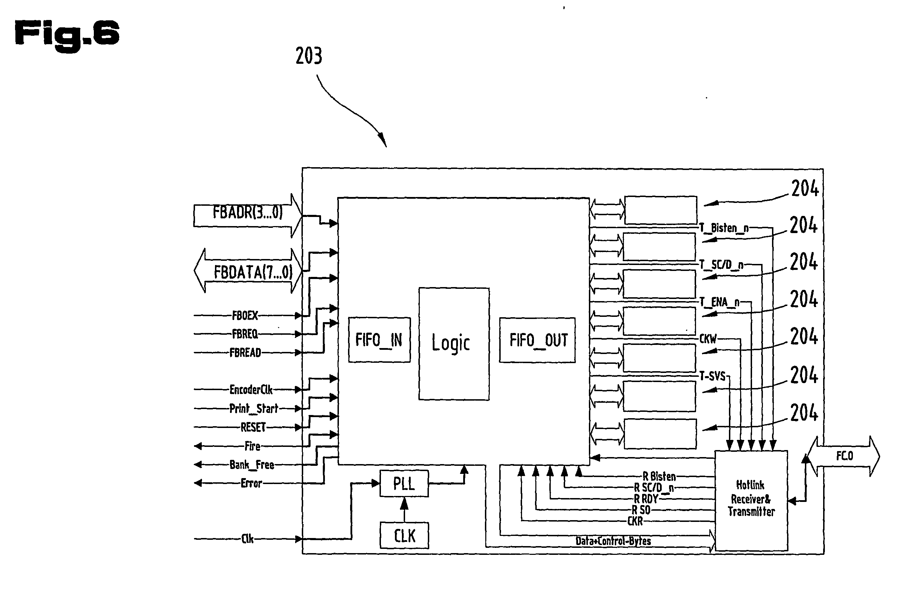

Nachfolgend wird die Funktionsweise der oben beschriebenen Tintenstrahldruckvornchtung 1 näher erläutert. Dabei wird angenommen, dass die zu bedruckenden Druckteile 3 durch Fliesen 151 gebildet werden. Zur Beschreibung der Funktionsweise wird auch auf die Fig. 5 und 6 Bezug genommen. Eine Vorrichtung bzw. ein System, wie es hier beschrieben wird, wird aufgrund seiner Verwendungsmöglichkeit als Teil eines kontinuierlichen Fertigungsprozesses bzw. einer kontinuierlichen Fertigungsstraße in der Folge auch als "Synchronized Inline Printing System" (SIPS), bzw. "Durst SIPS-Synchronized Inline Printing System" bezeichnet.

Durch die gewählte Anordnung von vielen relativ niedrig auflösenden Druckköpfen 6 in der in Fig. 2 beschriebenen Weise zu einer Druckkopfanordnung 5 erhält man einen großflächig verteilten Gesamtdruckkopf mit relativ hoher Auflösung. Die Druckkopfanordnung 5 ist, wie in Fig. 2 beschrieben, in vier Druckkopfreihen 26 für die vier verwendeten Farben aufgeteilt. Dies hat zur Folge, dass im Falle von relativ kurzen Fliesen 151 sich gleichzeitig mehrere Fliesen 151 unter der Druckkopfanordnung 5 befinden können. Zudem ist aber selbst eine Druckkopfreihe 26 in Bezug zu den kleinsten Fliesen 151 auch so groß, dass sich zwei Fliesen 151 gleichzeitig unter einer Druckkopfreihe 26 befinden können, wobei durch diese Druckkopfreihe 26 zwei zu unterschiedlichen Fliesen 151 gehörende Teilbilder gleichzeitig bedruckt werden. Die Steuereinrichtung 12 der Tintenstrahldruckvorrichtung 1 ist daher so ausgebildet, dass sie das gleichzeitige Drucken von verschiedenen Farbauszügen von mehreren Fliesen 151 sowie das gleichzeitige Drucken von zwei verschiedenen Fliesen 151 bzw. von zwei Bildern für einen Farbauszug ermöglicht.

Gemäß einem ersten Ausführungsbeispiel der Steuerung bzw. Betriebsweise der Tintenstrahldruckvorrichtung 1 ist eine Bilddatenübertragung zwischen dem Bildrechner 11 und den Druckköpfen 6 mit verschränkten Farbkanälen vorgesehen. Dabei wird ein gesamtes Bild bzw. werden die kompletten Bilddaten im Bildrechner 11 so aufbereitet, dass die gesamte Bildinformation über eine hochbitratige Übertragungsstrecke in Form von Paketen geschickt wird. Dabei sind die einzelnen Farbkanäle byteweise nacheinander in wiederkehrender Reihenfolge angeordnet. Zwischen dem Bildrechner 11 und der Druckkopfanordnung 5 besteht somit eine Übertragungsstrecke 201 (siehe Fig. 1 und Fig. 5). Da dazu weniger Hardwarekomponenten erforderlich sind, hat diese Variante den Vorteil einer geringeren Fehleranfälligkeit. Von Vorteil ist auch, dass dadurch einfachere Übertragungsprotokolle für die Datenübertragung zwischen dem Bildrechner 11 und der Druckkopfanordnung 5 möglich sind, als auch dass die Steuerung durch die Steuereinrichtung 12 einfacher erfolgen kann.

Die Fig. 5 zeigt ein Blockschaltbild des Datenflusses zwischen dem Bildrechner 11 und der Druckkopfanordnung 5. Aus Gründen der besseren Übersichtlichkeit, ist dabei nur eine der vier Druckkopfreihen 26 dargestellt, bzw. einer Bilddatenschaltung der Druckkopfanordnung.

Die Bilder bzw. Bilddaten für die einzelnen Fliesen 151 werden von der Steuereinrichtung 12, die den Druckablauf steuert, angefordert und vom Bildrechner 11 über die Übertragungstrecke 201 übertragen. Die Übertragungsstrecke 201 ist vorzugsweise durch eine faser-optische Datenübertragungsleitung realisiert. Ein Bild besteht dabei aus vier Farbauszügen, die byteweise ineinander verschränkt sind. Die entsprechenden Bildinformations-Datenpakte werden in einer Datenübertragungsschaltung 202 in vier Farbauszüge aufgespalten und in Pufferschaltungen 203 zwischengespeichert. Dabei werden die einzelnen Farbauszüge nach Bildern getrennt in getrennte Speicherbänke 204 (Fig. 6) der Pufferschaltung 203 geschrieben. Die Fig. 6 zeigt exemplarisch ein Blockschaltbild einer der Pufferschaltungen 203 gemäß Fig. 5. Fig. 6 zeigt in den Pufferschaltungen 203 können jeweils bis zu sieben Bilder (für sieben Fliesen) zwischengespeichert und nacheinander ausgegeben werden. Die Speicherbänke 204 arbeiten somit als dynamischer Ringpuffer, der eingeschriebene Bilder bei einem entsprechenden Eingangssignal bzw. Startsignal ausgibt.

Darüber hinaus erfüllt die Pufferschaltung 203 noch folgende weitere Aufgaben. Durch die Pufferschaltung 203 wird der Datenfluss zwischen ankommenden Druckdaten und zum Druckkopf ausgegebenen Daten gesteuert. Weiters bewirkt sie die Freigabe des Datenflusses vom Bildrechner 11. Die Pufferschaltung 203 sorgt aber auch dafür, dass in den Speicherbänken 204 (Fig. 6) für Fälle, in denen durch die Düsen der Druckköpfe 6 keine Tinte ausgestoßen werden soll, so genannte Nullinformation in den abgespeicherten Daten eingefügt werden. "Nullen" bzw. "Nullinformation" ist einerseits erforderlich für Zwischenräume zwischen zwei aufeinander folgenden Fließen 151 und andererseits für jene Zeiträume, zu denen sich eine Fliese 151 nicht vollständig unter den Druckköpfen 6 einer Druckkopfreihe 26 befeindet und daher aufgrund der Schrägstellung der Druckköpfe 6 nur diejenigen Düsen Tinte ausstoßen, die sich über einer Oberseite 17 einer Fliese 151 befinden.

Die Pufferschaltung 203 sorgt auch für die Verwaltung der Druckszenarien, wobei sich entweder immer nur eine Fliese 151 unter einer Druckkopfreihe 26 befindet oder andererseits für gewisse Zeiträume sich zwei Fließen 151 gleichzeitig unter einer Druckkopfreihe 26 befinden können.

Für die Art und Weise wie in der Pufferschaltung 203 Bilder für das Bedrucken von Fließen 151 zwischengespeichert werden, können zwei Szenarien unterschieden werden. Im ersten Fall enthält der Druckauftrag zum Bedrucken von mehreren Fliesen 151 nur Fliesen 151, die die gleiche Größe bzw. die gleiche Länge aufweisen. Beim zweiten Szenario ist vorgesehen, dass Fliesen 151 unterschiedlicher Länge bedruckt werden.

Es wird nun das Szenario für einen Druckauftrag mit Fliesen 151 von immer gleicher Fliesenlänge beschrieben. In diesem Fall teilt der Bildrechner 11 der Steuereinrichtung 12 die den Druckprozess steuert, die Fliesenlänge bzw. die entsprechende Anzahl der Datenpakete pro Fliese 151 mit. Beim Start des Druckauftrags werden zunächst sieben Bilder in die Speicherbänke 204 der Pufferschaltungen 203 geladen. Diese Bilder werden von der Steuereinrichtung über die Übertragungstrecke 201 bzw. die Datenübertragungsschaltung 202 vom Bildrechner 11 angefordert und den Pufferschaltungen 203 der einzelnen Farbauszüge weiter gegeben. Solange keine Fliese am Förderband 7 vom Eingangsbereich der Transporteinrichtung 2 her an die Druckkopfanordnung 5 heranbewegt wird, befindet sich das System vorerst in einer Wartephase. Sobald eine erste Fliese 151 den Startsensor bzw. den Sensor 18 passiert, startet ein Zählwerk 205 einen Zähler, der schließlich den Druckvorgang durch die einzelnen Druckkopfreihen 26 bzw. Farbkanäle auslöst. Erreicht der erste Zähler des Zahlwerks 205 bei der ersten detektierten Fliese 151 einen Zählerstand der dem Streckenäquivalent vom Montageort des Sensors 18 bis zur ersten Druckkopfreihe 26 (in Fig. 1 die Druckkopfreihe 26 für C = Zyan), so wird die Ausgabe dieses Farbauszuges bzw. der entsprechenden Daten aus der Pufferschaltung 203 für die Farbe Zyan gestartet. Dieser Vorgang erfolgt analog für die weiteren drei Farben. Durch ein Druckkopf-Interface 206 werden die Bilddaten auf die Druckköpfe 6 der Druckkopfmodule 25 der entsprechenden Druckkopfreihe 26 verteilt.

Je kürzer die ankommenden Fliesen 151 sind, desto häufiger wird durch den Sensor 18 ein Zähler des Zählwerkes 205 gestartet, bevor überhaupt die vollständige Ausgabe eines Bildes abgeschlossen ist. Da bei den kürzesten Fliesen 151 gleichzeitig insgesamt sechs Fliesen unter der Druckkopfanordnung sein können, umfasst das Zählwerk 205 sieben Zähler, die jeweils für eine der vom Sensor 18 delektierten Fliesen 151 nacheinander gestartet werden. Erreichen die individuellen Zähler des Zählwerkes 205 die Zählerstände, bei denen die einzelnen Farben ausgegeben werden, so wird von diesem die Ausgabe der Daten aus den Speicherbänken 204 der Pufferschaltungen 203 ausgelöst.

Erreichen die Zähler des Zählwerkes 205 einen maximalen Zählerstand, so werden sie wieder rückgesetzt und verbleiben in diesem Zustand, bis ein erneuter Start durch den Sensor 18 ausgelöst wird. Diese Art der Steuerung der Tintenstrahldruckvorrichtung 1 ermöglicht es, dass die Fließen 151 mit unterschiedlichen, relativen Abständen zueinander an der Druckkopfanordnung 5 ankommen können.

Aufgrund der Schrägstellung der Druckköpfe 6 in Bezug auf die Vorschubrichtung 4 (Fig. 2) ist eine entsprechend komplexe Organisation der Ausgabe der Daten aus den Speicherbänken 204 der Pufferschaltungen 203 erforderlich. Neben der Anordnung der Druckköpfe 6 innerhalb einer Druckkopfreihe 26 müssen die Bilddaten durch den Bildrechner 11 umsortiert werden. Dabei ist außerdem vorgesehen, dass von dem Bildrechner 11 nur Nutzdaten geschickt werden, d.h. nur für jene Düsen der Druckköpfe 6 bzw. für jene Bildpunkte, an denen tatsächlich ein Tintenausstoß erfolgen kann. Diese hat den Vorteil, dass die Kapazität der Übertragungsstrecke 201 maximal ausgenutzt werden kann.

Zunächst wird die Ansteuerung der Druckkopfanordnung 5 für den Fall, dass sich maximal eine Fliese 151 unter einer Druckkopfreihe 26 befindet, beschrieben. In diesem Fall ist der Abstand der ankommenden Fliesen 151 zueinander so groß, dass sich in keinem Fall zwei Fliesen 151 gleichzeitig unter einer Druckkopfreihe 26 befinden.

Für jeden Ausstoßvorgang von Tinten durch einen Druckkopf 6 muss zunächst für alle Düsen seiner Düsenreihe 22 die Information zur Verfügung gestellt werden, ob ein Tintenausstoß durch diese Düse erfolgen soll ("Eins") oder ob kein Tintenausstoß erfolgen soll ("Null"). Wegen der schrägen Ausrichtung der Druckköpfe 6 innerhalb einer Druckkopfreihe 26 ist es erforderlich, dass beim Eintritt einer Fließe 151 unter eine Druckkopfreihe 26 die einzelnen Druckköpfe 6 zunächst nur sukzessive für jeden Auslösevorgang von Tintenausstoß mit Nutzinformation geladen wird. Für jene Düsen einer Düsenreihe 22, die sich nicht über der Oberseite 17 der Fliese 151 befinden, ist dabei als Information "Null" vorzusehen. Mit zunehmendem Eintritt der Fliese 151 unter die Druckkopfreihe 26 nimmt somit die Anzahl der "Nullen" ab und im Gegenzug die Anzahl der zu druckenden Bildinformation zu. Die Pufferschaltungen 203 erkennen autark, dass sie auf jeden Ladezyklus eines Druckkopfs 6 zuerst "Nullen" und dann Nutzinformation aus der momentan zu druckenden Speicherbank 204 ausgeben muss, bis die Fliese 151 vollständig unter eine Druckkopfreihe 26 eingetreten ist. Dabei nimmt die Anzahl der "Nullen" ab und die Anzahl der Nutzbits zu, bis nur mehr Nutzbits in die Druckköpfe geladen werden. Wenn die Fliese 151 eine Druckkopfreihe 26 verlässt, wird der selbe Vorgang in umgekehrter Reihenfolge durchgeführt.

Bei der folgenden Beschreibung der Ansteuerung der Druckkopfanordnung 5 wird angenommen, dass sich phasenweise auch zwei Fliesen 151 gleichzeitig unter einer Druckkopfreihe 26 befinden können. In diesem Fall ist der Abstand der ankommenden Fliesen zueinander so gering, dass es auch vorkommt, dass zwei Fliesen 151 gleichzeitig unter einer Druckkopfreihe 26 vorbewegt werden. Dabei enthält die, einem Druckkopf 6 zur Verfügung gestellte Information gleichzeitig die Information eines ersten Bildes zum Bedrucken der ersten Fliese 151 und die Information eines zweiten Bildes der zweiten Fliese 151. Wenn nun die erste Fliese 151 die Druckkopfreihe 26 zu verlassen beginnt, dann fügt die Pufferschaltung 203 nach der Nutzinformation die schon erwähnten Nullbits ein, deren Anzahl von Auslösevorgang zu Auslösevorgang zunimmt. Tritt nun die nächste Fliese 151 unter die Druckkopfreihe 26 noch bevor die erste Fliese 151 die Druckkopfreihe 26 verlassen hat, so lädt die Pufferschaltung 203 die Druckköpfe 6 für einen Auslösevorgang zum Ausstoßen von Tinte sukzessive mit:

Daten aus der Speicherbank 204 n, für die Fliese 151, die aus der Druckkopfreihe 26 herausläuft und deren momentan bearbeiteter Farbauszug fast vollständig gedruckt ist;

Nullbits für die Berücksichtigung des Abstands zwischen den Fliesen 151;

Datenbank aus der Speicherbank 204 n + 1 für die zweite, unter die Druckkopfreihe 26 hineinlaufende Fliese 151.

In diesem Fall werden Bildinformationen von zwei Bildern gleichzeitig von zwei verschiedenen Speicherbänken 204 (n bzw. n + 1) der Pufferschaltung 203 ausgelesen und durch die Druckköpfe 6 der betreffenden Druckkopfreihe 26 gedruckt.

Von der Pufferschaltung 203 wird dabei auch berücksichtigt, dass von der gewählten Auflösung eine unterschiedliche Anzahl von Nullbits beim Einlaufen der Fliesen 151 bzw. zwischen zwei aufeinander folgenden Fliesen 151 (bei geringem Fliesenabstand) einzufügen sind. Es kann in Auflösungsstufen von 100, 200, 300, 400, 500, 600 und 800 DPI gedruckt werden.

Die vorstehend beschriebene Funktionsweise dient für alle vier Farben, kann aber auch für eine unterschiedliche Anzahl von Farben angewandt werden. Dabei ist die Anzahl der Druckkopfreihen 26 als auch die Anzahl der Pufferschaltungen 203 entsprechend zu ändern.

Der Druckvorgang für das Drucken eines Bildes auf eine Fliese 151 läuft somit für die einzelnen Farben folgendermaßen ab. Erreicht der der Fliese 151 zugeordnete Zähler des Zählwerks 205 den Zählerstand für "Drucken Zyan", so wird der Druckvorgang für Zyan gestartet. Erreicht der Zähler des Zählwerks 205 den Zählerstand "Drucken Magenta", so wird der Druckvorgang für Magenta gestartet usw. Die Schwell-Zählerstände für die Ausgabe der jeweiligen Farben werden von dem Bildrechner 11 der Elektronik der Druckkopfanordnung 5 mitgeteilt und dort gespeichert.

Es wird nun das Szenario für einen Druckauftrag mit Fliesen 151 von jeweils unterschiedlicher Fliesenlänge beschrieben. In einem solchen Fall benötigt das System zwei Sensoren, mit denen die Fliesen 151 detektiert werden. Der erste im Eingangsbereich der Transporteinrichtung 2 angeordnete Sensor 16 detektiert die Fliesen 151 und misst deren Länge. Abhängig von der gemessenen Länge, fordert die Steuereinrichtung 12 die den Druckablauf steuert, die zur gemessenen Fliese 151 passende Anzahl an Datenpaketen vom Bildrechner 11 an. Der Bildrechner 11 berechnet ein Bild passender Größe und schickt es an die Datenübertragungsschaltung 202. Erreicht die Fliese 151 den zweiten Sensor 18, der als so genannter Startsensor fungiert, so wird ein Zähler des Zählwerks 205 gestartet. Der Beginn des Druckens eines Farbauszuges durch die entsprechende Druckkopfreihe 26 wird wiederum nach Erreichen des entsprechenden Schwell-Zählerstandes für die entsprechende Farbe bzw. Druckkopfreihe 26, wie bereits oben beschrieben, ausgelöst.

Gemäß einem zweiten Ausführungsbeispiel der Betriebsweise der Tintenstrahldruckvorrichtung 1 ist eine Bilddatenübertragung zwischen dem Bildrechner 11 und den Druckköpfen 6 mit getrennten bzw. aufgespalteten Farbkanälen vorgesehen. Dabei werden im Bildrechner 11 vier verschiedene Farbauszüge gehalten und können von der Steuereinrichtung 12, die das Bild-Datenverarbeitungssystem steuert, bei Bedarf angefordert werden. Dabei sind wiederum zwei verschiedene Varianten möglich, nämlich einerseits die Verwendung einer einzigen Übertragungsstrecke 201 zwischen dem Bildrechner 11 und der Druckkopfanordnung 5 oder andererseits die Verwendung von vier parallelen Übertragungsstrecken 201 für einen jeden der Farbauszüge.

Im Falle der Verwendung einer einzigen Übertragungsstrecke 201, werden die getrennten Farbauszüge von der Steuereinrichtung 12 angefordert, sobald sich die Fliese 151 unter der entsprechenden Druckkopfreihe 26 befindet. Dabei werden die Daten für die einzelnen Farbauszüge mehrerer Fliesen 151 im Bildrechner 11 zwischengepuffert und müssen eindeutig zugeordnet werden. Hierbei kommt es vor, dass der letzte Farbauszug der ersten Fliese 151 erst dann angefordert wird, wenn der erste Farbauszug, beispielsweise der sechsten Fliese 151 bereits gedrückt wird. Von Vorteil ist bei dieser Variante, dass dabei eine geringere Anzahl von Speicherbänken 204 für den pro Farbe vorhandenen Ringpuffer erforderlich ist und die Daten für die einzelnen Farben nur angefordert werden, wenn sie auch unmittelbar gedruckt werden.

Im Fall der Variante von vier parallelen Übertragungsstrecken 201 sind in dem Bildrechner 11 für jeden Farbauszug entsprechende Interfacekarten notwendig. Das System arbeitet in dieser Variante mit getrennten, physikalischen Kanälen für die einzelnen Farbauszüge.

Die Tintenstrahldruckvorrichtung 1 ist vorzugsweise zum Bedrucken von keramischen Fliesen 151 mit Bildnern bzw. Motiven vorgesehen. Da bei dem Bedrucken der Fliesen 151 freibleibende Ränder den optischen Eindruck stören würden, ist vorgesehen, dass bei der Erzeugung der Bilddaten zur Ansteuerung der Druckkopfanordnung 5 durch den Bildrechner der entsprechende Bildausschnitt derart gewählt wird, dass zumindest geringfügig über die Ränder der Fliesen 151 hinaus gedruckt wird. Bei der Berechnung der Bildinformationsdaten durch den Bildrechner 11 kann aber auch der Schwund der als Rohlinge vorliegenden Fliesen 151 bei der Bestimmung der Größe der zu druckenden Bildausschnitts berücksichtigt werden.

Der Bildrechner 11 erlaubt aber auch die Aufteilung eines die Fläche vieler Fliesen 151 überdeckenden Bildes und des Drucken der Teilausschnitte auf eine entsprechende Anzahl von Fliesen 151. Nach geeigneter Zusammensetzung der einzelnen Fliesen 151 mit jeweils einem Teilausschnitt können somit auf einfache Weise sehr große Gesamtbilder hergestellt werden. Dies ist insbesondere ohne die aufwendige Herstellung von Druckvorlagen möglich.

Ein weiteres Beispiel der vielfältigen Anwendungsmöglichkeiten ist das Erzeugen von möglichst unterschiedlich gemusterten Fliesen 151. Dies wird dadurch erreicht, dass aus einer Bildvorlage, die beispielsweise die Maserung einer Steinstruktur bzw. einer Bruchfläche eines Steines wiedergibt, durch den Bildrechner 11 ein zufällig gewählter Bildausschnitt bestimmt wird und als Grundlage zur Erzeugung des Druckbildes auf der Fliese 151 verwendet wird. Ein jeder dieser durch den Bildrechner 11 zufällig ausgewählten Bildausschnitte wird jedoch nur zum Bedrucken einer einzigen Fliese 151 verwendet, sodass jede der Fliesen 151 ein individuelles Erscheinungsbild aufweist und nach deren Zusammensetzung keine wiederkehrenden Muster in dem erhaltenen Gesamtbild erkennbar sind. Das wiedergegebene Muster der Steinstruktur erweckt dadurch in seiner Gesamtheit einen sehr natürlichen Eindruck.

Der Bildrechner 11 erlaubt aber auch die Berücksichtigung einer, von einer ebenen Oberseite 17 abweichenden Oberflächenstruktur, die beispielsweise Vertiefungen enthalten kann. Die Oberflächenstruktur der Oberfläche 17 kann durch den Bildrechner 11 insofern berücksichtigt werden, als von dieser vorgesehen wird, dass ein ausgewähltes Motiv, beispielsweise nur im Bereich von Vertiefungen der Fliese 151 gedruckt wird.

Für die Übertragung der Daten von dem Bildrechner 11 zu der Druckkopfanordnung 5 ist insbesondere vorgesehen, dass über die Übertragungsstrecke 201 zwischen 30 MB/s und 70 MB/s, vorzugsweise 50 MB/s, übertragen werden können. Besonders vorteilhaft erweist sich die Übertragung der Daten vom Bildrechner 11 über die Übertragungsstrecke 201 mit einer Übertragsrate von 50 oder mehr als 50 MB/s (Megabyte/Sekunde) durchzuführen. Beim Betrieb der Tintenstrahldruckvorrichtung 1 ist es somit möglich, dass der Vorschub der Druckteile 3 durch die Transporteinrichtung 3 mit einer Geschwindigkeit von bis zu 70 m/min (Meter/Minute) erfolgt. Insbesondere ist vorgesehen, dass die Bewegung der Druckteile mit einer variablen Geschwindigkeit von bis zu 70 m/min erfolgen kann.

Wie oben beschrieben worden ist, ist für das Bedrucken von rechteckigen Fliesen 151 die Einrichtung 20 zur Lagekorrektur der Druckteile 3 vorgesehen, durch die die Fliesen 151 in ein definierte Lage gebracht werden können. Die Tintenstrahldruckvonichtung 1 erlaubt aber auch das Bedrucken von Druckteilen 3 beliebiger äußerer Kontur bzw. Form, als auch Ausrichtung. Dazu ist vorgesehen, dass im Eingangsbereich der Transporteinrichtung 2 die Kamera 21 ein Bild des auf dem Förderband 7 liegenden Druckteiles 3 aufzeichnet. Dieses Bild wird von der Kamera 21 an die Steuereinrichtung 12 übertragen und mit Hilfe einer Software zur automatischen Bilderkennung die Kontur des Druckteiles 3 ermittelt. Die Kontur des Druckteiles 3 wird schließlich an den Bildrechner 11 übermittelt. Dieser berücksichtigt die Form und Ausrichtung des Druckteiles, indem das zu druckende Motiv bzw. die entsprechenden Bilddaten transformiert, d.h. Lage und Ausrichtung angepasst, werden.

Zur Erhöhung der Leistungsfähigkeit der Tintenstrahldruckvorrichtung 1 kann auch vorgesehen werden, dass weitere Computer eines Netzwerkes zur Berechnung von Bilddaten für Druckaufträge mit dem Bildrechner 11 verbunden sind. Dabei ist es besonders von Vorteil, wenn die Steuereinrichtung 12, die selbst durch einen Computer gegliedert sein kann, und der Bildrechner 11 Bestandteil einer Client-Server-Architektur eines Computemetzwerkes sind, wobei in dem Computernetzwerk weitere Client-Rechner für die Berechnung von Bilddaten neben dem Bildrechner 11 zur Verfügung stehen. Dieser ermöglicht es, dass während eines laufenden Druckvorganges durch die zusätzlichen Client-Rechner bereits Druck-Jobs für eine spätere Verwendung vorbereitet bzw. berechnet werden können.

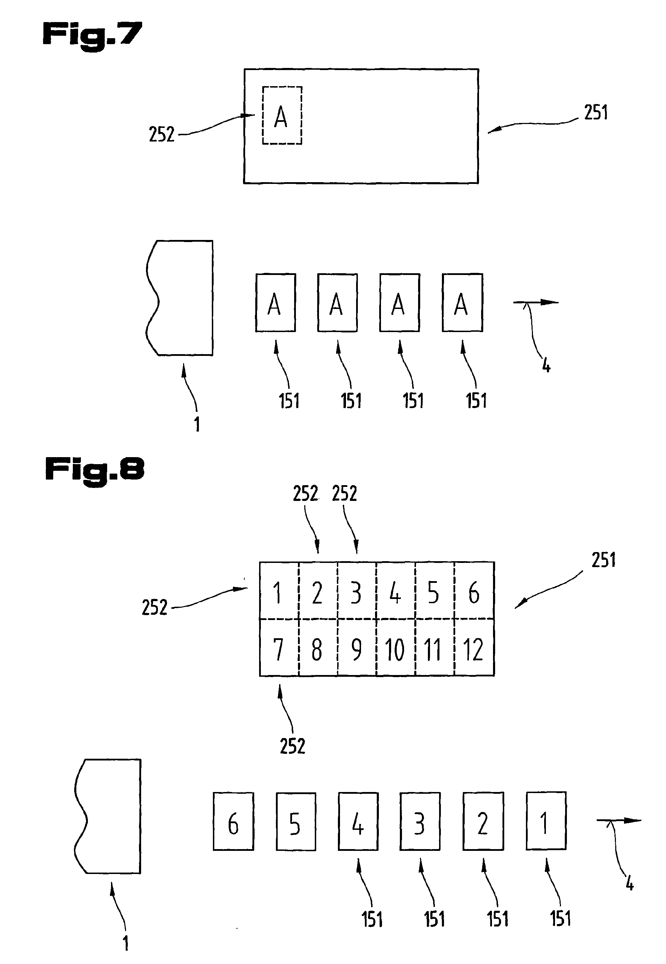

Anhand der nachfolgenden Fig. 7 bis 13 sollen nun verschiedene Betriebsweisen des Bedruckens von Fliesen 151 mit der Tintenstrahldruckvorrichtung 1 näher beschrieben werden.

Mit der erfindungsgemäßen Tintenstrahlvorrichtung 1, ist es möglich dass während laufendem Drucken on-the-fly aus einer größeren Bilddatei wahlweise nach einem geordneten Ablauf oder nach Random-/Zufallsprinzip (in beiden Fällen sind mehrere Betriebsarten möglich) automatisch unterschiedliche Ausschnitte so gedruckt werden, dass nach Möglichkeit jede bedruckte Vorlage (z.B. eine Fliese) ein anderes Muster hat und somit der Natur am besten nachempfunden wird. Dabei bedeutet "on-the fly", dass die Bilddatenverarbeitung einer zu druckenden Bilddatei derart erfolgen kann, dass während bereits der Aufdruck eines ersten Teiles des Bildes durch die Druckköpfe 6 der Druckkopfanordnung 5 erfolgt, die Berechnung der Bilddaten zur Ansteuerung der Druckkopfanordnung für einen weiteren Teil des Bildes bzw. der Bilddaten noch im Gange ist. Die Bilddatenverarbeitung erfolgt somit in diesem Sinne in Echtzeit.

In Fig. 7 ist in symbolisch vereinfachter Darstellungsweise die Herstellung einer Reihe von Fliesen 151 mit einem dekorativen Motiv wiedergegeben. Dazu wird aus einer Bildvorlage 251 mit Hilfe der Software der Bilddatenverarbeitung des Bildrechners 11 (Fig. 1) von dem Bediener ein Bildausschnitt 252 ausgewählt. Als Bildvorlage 251 wird beispielsweise das digitale Bild einer Bruchfläche eines Steins bzw. einer Steinstruktur verwendet. Die Größe dieser Bildvorlage 251 entspricht beispielsweise einer realen Größe von ca. 1 m x 2 m Seitenlänge und ermöglicht so die Auswahl eines geeigneten Bildausschnitts 252 von einer den Fliesen 151 entsprechender Größe. In der einfachsten Verfahrensweise wird der gleiche Bildausschnitt 252 auf eine voraus gewählte Anzahl von Fliesen 151 durch die Tintenstrahldruckvorrichtung 1 aufgebracht. Die Reihe der Fliesen 151 ist in Fig. 7 im fertig bedruckten Zustand, aus der Tintenstrahldruckvorrichtung 1, auslaufend dargestellt. Die Fliesen 151 sind jeweils mit dem gleichen Bildausschnitt 252 - symbolisiert durch den Buchstaben A - bedruckt.

Fig. 8 zeigt das Bedrucken einer Reihe von Fliesen 151 mit einer geordneten Auswahl von Bildausschnitten 252 aus der Bildvorlage 251. In dem Ausführungsbeispiels sind aus der Bildvorlage 251 zwölf nebeneinander liegende Bildausschnitte 252 - symbolisiert durch die Ziffern "1" bis "12" - ausgewählt. Jeweils zwölf Fliesen 151 können somit jeweils individuell mit einem unterschiedlichen Bildausschnitt 252 bedruckt werden, womit eine entsprechende Vielfalt unterschiedlich gestalteter Fliesen 151 erreicht wird.

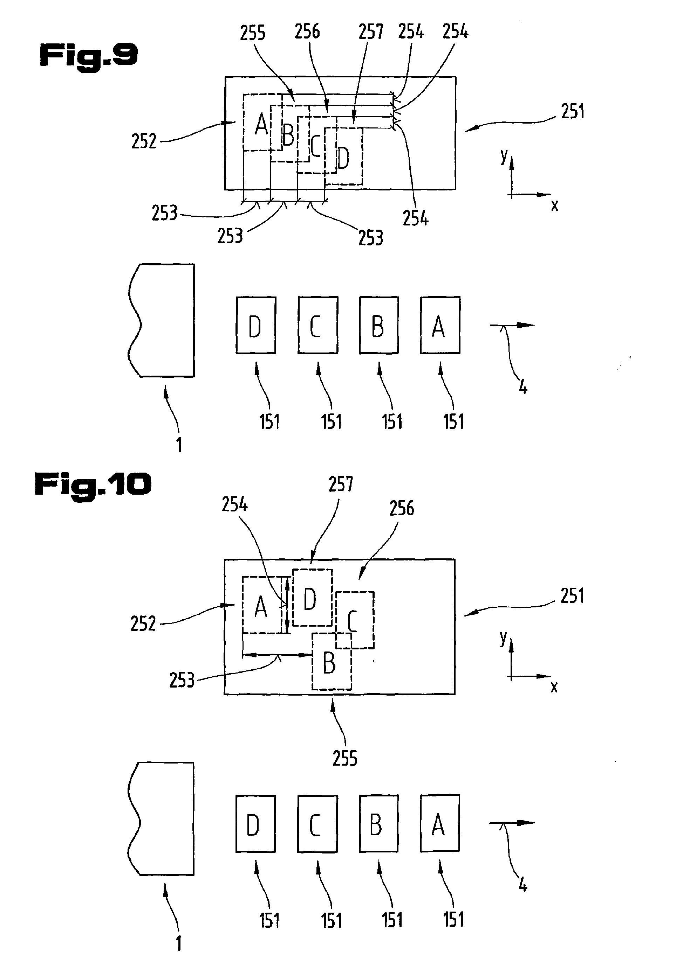

In der Fig. 9 ist ein weiteres Beispiel der Auswahl individuell unterschiedlicher Bildausschnitte 252 aus einer Bildvorlage 251 zum Bedrucken bzw. Dekorieren von Fließen 151 dargestellt. In diesem Fall wird zunächst ein erster Bildausschnitt 252 aus der Bildvorlage 251 gewählt. Zusätzlich wird ein Abstand 253 und ein Abstand 254 in X- bzw. Y-Richtung gewählt. Ein zweiter Bildausschnitt 255 wird sodann dadurch erhalten, dass die Begrenzungen des ersten Bildausschnittes 252 in X- bzw. Y-Richtung um den entsprechenden Abstand 253 in X-Richtung bzw. den Abstand 254 in Y-Richtung verschoben werden. Durch eine weitere Verschiebung der Begrenzungen des Bildausschnittes 255 um Abstände 253, 254 in X- bzw. Y-Richtung wird schließlich ein dritter Bildausschnitt 256 bzw. ein vierter Bildausschnitt 257 erhalten. Dieses Vorgehen bei der Auswahl von Bildausschnitten 252 kann zumindest solange fortgesetzt werden, bis die Begrenzungen der Bildvorlage 251 erreicht werden. Die Menge aller dieser Bildausschnitte 251, 255, 256 usw., werden durch den Bildrechner 11 bereitgehalten und stehen zum Bedrucken einer entsprechenden Anzahl von Fliesen 151 zur Verfügung.

In den Fig. 10, 11 und 12 sind Beispiele für die zufällige Auswahl von Bildausschnitten 252 aus einer Bildvorlage 251 gezeigt.

Bei dem Verfahren gemäß Fig. 10 wird zunächst ein erster Bildausschnitt 252 gewählt, worauf für die Abstände 253, 254 ein zuverlässiges Wertepaar bestimmt wird, in dessen Abhängigkeit sodann der zweite Bildausschnitt 255 bestimmt wird. Mit weiteren, zufälligen Wertepaaren für die Abstände 253, 254 zur Versetzung in X- bzw. Y-Richtung werden sodann die weiteren Bildausschnitte 256, 257 usw. bestimmt.

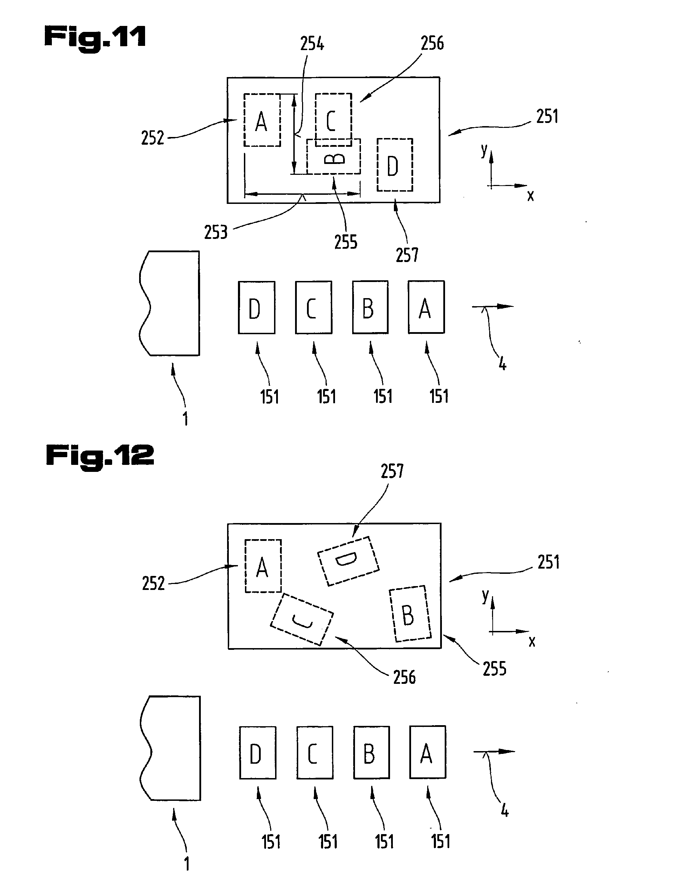

Im Auswahlverfahren für die Bildausschnitte 252 gemäß Fig. 11 ist zusätzlich vorgesehen, dass neben einer zufälligen Auswahl der Abstände 253 bzw. 254 auch eine zufällige Drehung der Begrenzungslinien des zweiten Bildausschnitts 255 bzw. der folgenden Bildausschnitte 256, 257, usw. um 90 ° erfolgt.

Gemäß dem Auswahlverfahren wie in Fig. 12 symbolisch dargestellt, ist zur Bestimmung der weiteren Bildausschnitte 255, 256, 257, usw., ausgehend von einem ersten Bildausschnitt 252, sowohl eine Versetzung um zufällig gewählte Abstände 253, 254 in X- bzw. Y-Richtung als auch eine auf zuverlässige Weise gewählte Verdrehung um einen beliebigen Winkel in der XY-Ebene vorgesehen.

Die gemäß den Fig. 8 bis 12 beschriebenen Auswahlverfahren von Bildausschnitten 252 erlauben so das Erzeugen von unterschiedlich gemusterten Fliesen 151, sodass jede von diesen ein möglichst individuelles Erscheinungsbild aufweist und so ein sehr natürlicher Eindruck erreicht werden kann.

Als zusätzliche Variationsmöglichkeit der Betriebsweise der Tintenstrahldruckvorrichtung kann auch vorgesehen werden, dass durch die Steuereinrichtung 12 bzw. den Bildrechner 11, den einzelnen Bildausschnitten 252, 255, 256 usw. aus der Folge der Bildausschnitte 252 (Fig. 8 bis 12) jeweils ein Wert einer prozentualen Häufigkeit (h_{A}, h_{B}, usw.) zugeordnet werden kann. Dadurch kann erreicht werden, dass bei einer großen Zahl hergestellter Fliesen 151 solche mit einem Aufdruck entsprechend dem Bildausschnitt 252 "A" mit einer Häufigkeit h_{A} und solche mit einem Bildausschnitt 255 "B" mit einer prozentualen Häufigkeit h_{B} in der Menge der Bedruckten Fliesen 151 enthalten sind (Fig. 12).

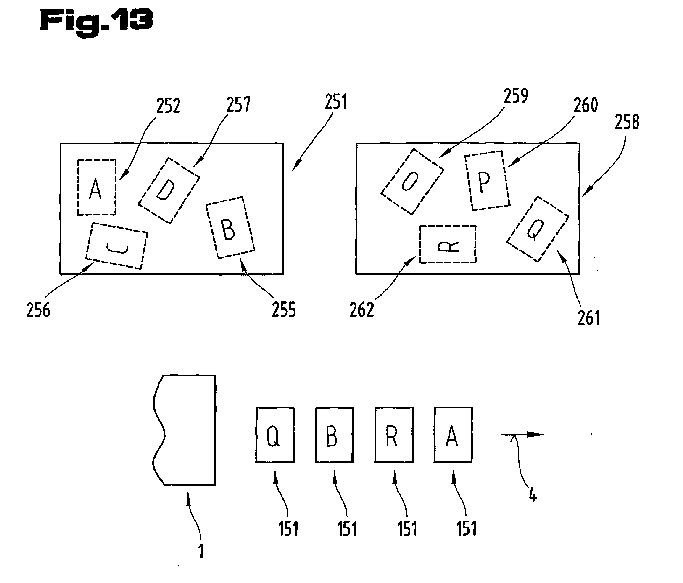

Anhand der Fig. 13 wird eine weitere Variationsmöglichkeit zur Betriebsweise der Tintenstrahldruckvorrichtung 1 zur Herstellung möglichst unterschiedlich mit dekorativen Motiven versehener Fliesen 151 beschrieben. Neben einer Folge von Bildausschnitten 252, 254, 255, usw. einer ersten Bildvorlage 251 (A, B, C, D, usw.) wird durch den Bildrechner 11 bzw. einen weiteren Clientrechner eines mit dem Bildrechner 11 bzw. der Steuereinrichtung 12 in Verbindung stehenden Computernetzwerkes aus einer zweiten Bildvorlage 258 eine weitere Folge von Bildausschnitten 259, 260, 261, 262, usw. (O, P, Q, R, usw.) berechnet. Es wird somit ein erster Druckauftrag bzw. Printjob mit den Bildausschnitten 252, 255, 256, usw. (A, B, C, D) der ersten Bildvorlage 251 und ein zweiter Druckauftrag bzw. Printjob mit den Bildausschnitten 259, 260, 261 usw. (O, P, Q, R, usw.) durch den Bildrechner 11 erzeugt und zum Bedrucken von Fliesen 151 bereit gehalten. Als weitere Variationsmöglichkeit kann vorgesehen sein, dass eine zufällige Durchmischung von Bildausschnitten 252, 255, usw. des ersten Druckauftrages mit den Bildausschnitten 259, 260, usw. des zweiten Druckauftrages erfolgt. Während des laufenden Druckvorganges mit der Tintenstrahldruckvorrichtung 1 werden von der Steuereinrichtung 12 in zufälliger Weise die Daten von Bildausschnitten aus den unterschiedlichen Bildvorlagen 251, 258 gewählt und zum Bedrucken der Fliesen 151 verwendet.

Mit der Tintenstrahldruckvorrichtung 1 ist aber auch das passgenaue Bedrucken von Fliesen 151 mit einer reliefartigen Oberflächenstruktur mit einem dieser Oberflächenstruktur entsprechenden Bildausschnitt möglich. Dazu wird mit der in dem Eingangsbereich der Transporteinrichtung 2 der Tintenstrahldruckvorrichtung 1 (Fig. 1) angeordneten Kamera 21 der Druckteil 3 bzw. die Fliese 151 identifiziert. Alternativ kann die Erkennung der Fliese 151 beispielsweise auch durch eine an der Unterseite der Fliese 151 angebrachte Markierung mit einem Code und die Erfassung dieses Codes mit einem geeigneten Sensor (nicht dargestellt) erfolgen. Von der Steuereinrichtung 12 wird sodann veranlasst, dass von dem Bildrechner 11 das der Fliese 151 bzw. deren Oberflächenstruktur entsprechende Bild zum Drucken zur Verfügung gestellt wird. Durch Detektion der Art der Fliese 151 als auch deren Ausrichtung mit der Kamera 21 kann in der Folge sichergestellt werden, dass Teile des entsprechenden Bildes, die einer Erhebung entsprechen, auch an der entsprechenden erhabenen Stelle der Fliese 151 und Teile des Bildes, die einer Vertiefung entsprechen, an einer entsprechend vertieften Stelle der Fliese 151 gedruckt werden. Durch das Vorsehen eines Codes an den Druckteilen 3 bzw. den Fliesen 151 bzw. durch das Erfassen und Identifizieren mit der Kamera 21 ist es möglich, dass unterschiedliche Fliesen 151, die mit unterschiedlichen Oberflächenstrukturen versehen sind, in einem gemeinsamen Druckauftrag bearbeitet werden können. Je nachdem welche Art von Fliesen 151 durch die Kamera 20 erfasst bzw. erkannt wird, wird durch die Steuereinrichtung 12 bzw. dem Bildrechner 11 das entsprechende Bild zum Bedrucken bereit gehalten und werden die Druckköpfe der Druckkopfanordnung 5 mit den entsprechenden Steuersignalen angesteuert.

Die Ausführungsbeispiele zeigen mögliche Ausführungsvarianten des der Tintenstrahldruckvorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Tintenstrahldruckvorrichtung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 4; 5, 6; 7, 8, 9; 10, 11, 12 und 13 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Tintenstrahldruckvorrichtung
- 2: Transporteinrichtung
- 3: Druckteil
- 4: Vorschubrichtung
- 5: Druclckopfanordnung

- 6: Druckkopf
- 7: Förderband
- 8: Umlenkrolle
- 9: Führungsplatte
- 10: Führung

- 11: Bildrechner
- 12: Steuereinrichtung
- 13: Tank
- 14: Düsenspüleinrichtung
- 15: Reinigungseinrichtung

- 16: Sensor
- 17: Oberseite
- 18: Sensor
- 19: Vorderkante
- 20: Einrichtung

- 21: Kamera
- 22: Düsenreihe
- 23: Düsenreihenlänge
- 24: Druckbereichbreite
- 25: Druckkopfinodul

- 26: Druckkopfreihe
- 27: Druckbereichsbreite
- 28: Druckbereichslänge

- 101: Trichterreihe
- 102: Auffangtrichter
- 103: Trichterreihe
- 104: Auffangrichter
- 105: Düsenreinigungseinrichtung

- 106: Absaugbalken
- 107: Absaugdüse
- 108: Leitung
- 109: Pumpe
- 110: Tintenreinigungseinrichtung

- 111: Tank
- 112: Mitnehmerrolle
- 113: Zwischenspeicher

- 151: Fliese
- 152: Führungsleiste
- 153: Führungsleiste
- 154: Abstand
- 155: Breite
- 156: Stellschlitten
- 157: Stellschlitten

- 201: Übertragungsstrecke
- 202: Datenübertragungsschaltung
- 203: Pufferschaltung
- 204: Speicherbank
- 205: Zählwerk
- 206: Druckkopf-Interface

- 251: Bildvorlage
- 252: Bildausschnitt
- 253: Abstand
- 254: Abstand
- 255: Bildausschnitt

- 256: Bildausschnitt
- 257: Bildausschnitt
- 258: Bildvorlage
- 259: Bildausschnitt
- 260: Bildausschnitt

- 261: Bildausschnitt
- 262: Bildausschnitt

## Patentansprüche

1. Tintenstrahldruckvorrichtung (1) zum Drucken mehrfarbiger Bilder mit einer im Wesentlichen horizontal angeordneten Transporteinrichtung (2) zum Bewegen von darauf liegenden, zu bedruckenden Druckteilen (3) in einer Vorschubrichtung (4) und mit einer oberhalb der Transporteinrichtung (2) angeordneten Druckkopfanordnung (5), die während des Druckvorganges relativ zur Transporteinrichtung (2) stationär angeordnet ist, wobei die Druckkopfanordnung (5) aus mehreren Druckköpfen (6) mit jeweils mehreren in einer Düsenreihe (26) angeordneten Düsen gebildet ist, und wobei die Düsenreihen (22) eine senkrecht bezüglich der Vorschubrichtung (4) gemessene Druckbereichbreite (24) aufweisen, durch die eine gesamte Druckbereichsbreite (27) der Druckkopfanordnung (5) entsprechend der Anzahl der Druckköpfe (6) gebildet ist, wobei die Druckkopfanordnung (5) an einer Führung (10) vertikal verstellbar angeordnet ist und eine Düsenspüleinrichtung (14) zur bedarfsweisen Positionierung unter der Druckkopfanordnung (5) ausgebildet ist, **dadurch gekennzeichnet, dass** die Düsenspüleinrichtung (14) für jede der Druckkopfreihen (26) eine Trichterreihe (101) aufweist, wobei die Trichterreihen (101) jeweils durch eine separate Leitung (108) mit einem der jeweiligen Farbe entsprechenden Tank (13) zur Versorgung der Druckköpfe (6) verbunden sind, wobei zwischen den Trichterreihen (101) und den Tanks (13) jeweils eine Tintenreinigungseinrichtung (110) angeordnet ist, und wobei die Düsenspüleinrichtung (14) eine weitere Trichterreihe (103) aufweist, wobei die weitere Trichtenreihe (103) mit einem Abfalltank verbindbar ist.

2. Tintenstrahldruckvorrichtung (1) nach Anspruch 1, **dadurch gekennzeichnet, dass** die Trichterreihe (101, 103) zumindest einen Auffangtrichter (102, 104) für eine jede der zu druckenden Farben umfasst, wobei der Auffangtrichter (102, 104) eine Auffangfläche hat, die alle Düsen eines Druckkopfes (6) abdeckt.

3. Tintenstrahldruckvorrichtung (1) nach Anspruch 1 oder 2, **dadurch gekennzeichnet, dass** für eine jede der zu druckenden Farben eine sich senkrecht bezüglich der Vorschubrichtung (4) erstreckende Druckkopfreihe (26) ausgebildet ist, wobei die Druckkopfreihen (26) durch nebeneinander angeordnete Druckköpfe (6) gebildet sind, und wobei die Druckkopf-reihen (26) bezüglich der Vorschubrichtung (4) hintereinander angeordnet sind.

4. Tintenstrahldruckvorrichtung (1) nach Anspruch 3, **dadurch gekennzeichnet, dass** mehrere Druckköpfe (6) jeweils einer der Druckkopfreihen (26) ein Druckkopfmodul (25) bilden und die Druckkopfreihen (26) jeweils durch mehrere Druckkopfmodule (25) gebildet sind.

5. Tintenstrahldruckvorrichtung (1) nach einem der vorhergehenden Ansprüche, **dadurch gekennzeichnet, dass** die Düsenreihen (22) bezüglich der Vorschubrichtung (4) schräg angeordnet sind.

6. Tintenstrahldruckvorrichtung (1) nach einem der vorhergehenden Ansprüche, **dadurch gekennzeichnet, dass** die Abstände der Trichterreihen (101) bezüglich der Vorschubrichtung (4) so bemessen sind, dass alle Druckkopfreihen (26) gleichzeitig über einer Trichterreihe (101) positioniert werden können.

7. Tintenstrahldruckvorrichtung (1) nach einem der vorhergehenden Ansprüche, **dadurch gekennzeichnet, dass** die Düsenspüleinrichtung (14) eine Düsenreinigungseinrichtung (105) umfasst.

8. Tintenstrahldruckvorrichtung (1) nach Anspruch 7, **dadurch gekennzeichnet, dass** die Düsenreinigungseinrichtung (105) mit Absaugdüsen (107), die unterhalb der Düsen der Druckköpfe (6) positionierbar sind, ausgebildet ist.

9. Tintenstrahldruckvorrichtung (1) nach Anspruch 8, **dadurch gekennzeichnet, dass** die Absaugdüsen (107) an einem Absaugbalken (106) angeordnet sind, wobei die Absaugdüsen (107) in einer geraden Reihe, die senkrecht bezüglich der Vorschubrichtung (4) ausgerichtet ist, angeordnet sind und wobei zwei einander benachbarte Absaugdüsen (107) in einem Abstand gleich dem Abstand zweiter benachbarter Druckköpfe (6) einer Druckkopfreihe (26) angeordnet sind.

10. Tintenstrahldruckvorrichtung (1) nach Anspruch 9, **dadurch gekennzeichnet, dass** der Absaugbalken (6) an der Düsenspüleinrichtung (14) in einer Richtung senkrecht bezüglich der Vorschubrichtung (4) zumindest im Ausmaß des Abstands zweier benachbarter Druckköpfe (6) verschiebbar angeordnet ist.

11. Tintenstrahldruckvorrichtung (1) nach Anspruch 9 oder 10, **dadurch gekennzeichnet, dass** der Absaugbalken (6) mit einem Mitnahmezapfen bzw. mit einer Mitnehmerrolle (112) zum Eingriff in eine Führungsbahn der Druckkopfreihen (26) ausgebildet ist, wobei die Führungsbahnen parallel zu den Düsenreihen (22) ausgerichtet sind.

12. Tintenstrahldruckvorrichtung (1) nach Anspruch 7, **dadurch gekennzeichnet, dass** die Düsenreinigungseinrichtung (105) durch eine Abwischeinrichtung gebildet ist, die ein über eine Umlenkwalze umlaufendes und mit einem Reinigungsmittel getränktes Band umfasst.

13. Tintenstrahldruckvorrichtung (1) nach einem der vorhergehenden Ansprüche, **dadurch gekennzeichnet, dass** die Transporteinrichtung (2) durch ein Förderband (7) gebildet ist.

14. Tintenstrahldruckvorrichtung (1) nach Anspruch 13, **dadurch gekennzeichnet, dass** die Transporteinrichtung (2) eine Führungsplatte (9) umfasst, über die ein in Vorschubrichtung (4) bewegter oberer Abschnitt des Förderbandes (7) gerührt ist.

15. Tintenstrahldruckvorrichtung (1) nach Anspruch 13 oder 14, **dadurch gekennzeichnet, dass** eine Reinigungseinrichtung (15) zur Reinigung des Förderbandes (7) angeordnet ist.

16. Tintenstrahldruckvorrichtung (1) nach einem der vorhergehenden Ansprüche, **dadurch gekennzeichnet, dass** der Transporteinrichtung (2) ein Zwischenspeicher (113) vorgeordnet ist, wobei der Zwischenspeichers (113) zur Aufnahme von Druckteilen (3) während eines Zeitraums zu dem das Förderband (7) angehalten ist ausgebildet ist.

## Claims

1. Ink jet printing device (1) for printing multicoloured images with an essentially horizontally disposed conveyor mechanism (2) for moving items to be printed (3) lying on it in a forward feed direction (4), and with a print head arrangement (5) disposed above the conveyor mechanism (2) which is disposed stationary relative to the conveyor mechanism (2) during the printing process, and the print head arrangement (5) comprises several print heads (6) each with several nozzles disposed in a nozzle row (26), and the nozzle rows (22) have a printing range width (24) as measured perpendicular to the forward feed direction (4) by means of which a total printing range width (27) of the print head arrangement (5) is formed corresponding to the number of print heads (6), and the print head arrangement (5) is disposed so that it can be moved vertically on a guide (10) and a nozzle rinsing device (14) which can be positioned underneath the print head arrangement (5) as and when necessary is provided, **characterised in that** the nozzle rinsing device (14) has a funnel row (101) for every print head row (26) and the funnel rows (101) are each connected via a separate line (108) to a tank (13) corresponding to the respective colour for supplying the print heads (6), and an ink cleaning device (110) is respectively provided between the funnel rows (101) and the tanks (13), and the nozzle rinsing device (14) has another funnel row (103), which other funnel row (103) can be connected to a waste tank.

2. Ink jet printing device (1) as claimed in claim 1, **characterised in that** the funnel row (101, 103) has at least one catchment funnel (102, 104) for each of the colours to be printed and the catchment funnel (102, 104) has a catchment surface which covers all the nozzles of a print head (6).

3. Ink jet printing device (1) as claimed in claim 1 or 2, **characterised in that** a print head row (26) extending perpendicular to the forward feed direction (4) is provided for each of the colours to be printed, and the print head rows (26) are formed by adjacently disposed print heads (6), and the print head rows (26) are disposed one after the other in the forward feed direction (4).

4. Ink jet printing device (1) as claimed in claim 3, **characterised in that** several print heads (6) of each one of the print head rows (26) constitutes a print head module (25) and the print head rows (26) are each made up of several print head modules (25).

5. Ink jet printing device (1) as claimed in one of the preceding claims, **characterised in that** the nozzle rows (22) are disposed obliquely with respect to the forward feed direction (4).

6. Ink jet printing device (1) as claimed in one of the preceding claims, **characterised in that** the distances of the funnel rows (101) with respect to the forward feed direction (4) are dimensioned so that all of the print head rows (26) can be positioned above a funnel row (101) simultaneously.

7. Ink jet printing device (1) as claimed in one of the preceding claims, **characterised in that** the nozzle rinsing device (14) has a nozzle cleaning unit (105).

8. Ink jet printing device (1) as claimed in claim 7, **characterised in that** the nozzle cleaning unit (105) is provided with suction nozzles (107) which can be positioned underneath the nozzles of the print heads (6).

9. Ink jet printing device (1) as claimed in claim 8, **characterised in that** the suction nozzles (107) are disposed on a suction bar (106) and the suction nozzles (107) are disposed in a straight line oriented perpendicular to the forward feed direction (4), and two mutually adjacent suction nozzles (107) are disposed at a distance that is equal to the distance between two adjacent print heads (6) of a print head row (26).

10. Ink jet printing device (1) as claimed in claim 9, **characterised in that** the suction bar (6) is disposed on the nozzle rinsing device (14) so that it can be displaced in a direction perpendicular to the forward feed direction (4) at least to the extent of the distance between two adjacent print heads (6).

11. Ink jet printing device (1) as claimed in claim 9 or 10, **characterised in that** the suction bar (6) is provided with a driving pin or with a driving roller (112) which engages in a guide track of the print head rows (26), and the guide tracks are oriented parallel with the nozzle rows (22).

12. Ink jet printing device (1) as claimed in claim 7, **characterised in that** the nozzle cleaning unit (105) is provided in the form of a wiper unit, comprising a belt impregnated with a cleaning fluid which circulates round a pulley roller.

13. Ink jet printing device (1) as claimed in one of the preceding claims, **characterised in that** the conveyor mechanism (2) is provided in the form of a conveyor belt (7).

14. Ink jet printing device (1) as claimed in claim 13, **characterised in that** the conveyor mechanism (2) has a guide plate (9) by means of which a moved top portion of the conveyor belt (7) is guided in the forward feed direction (4).

15. Ink jet printing device (1) as claimed in claim 13 or 14, **characterised in that** a cleaning unit (15) is provided for cleaning the conveyor belt (7).

16. Ink jet printing device (1) as claimed in one of the preceding claims, **characterised in that** a temporary buffer (113) is disposed upstream of the conveyor mechanism (2), which temporary buffer (113) is designed to accommodate items to be printed (3) during a period in which the conveyor belt (7) is stopped.

## Revendications

1. Dispositif d'impression à jet d'encre (1) pour l'impression d'images en plusieurs couleurs avec une installation de transport (2) disposée sensiblement horizontalement pour le déplacement de parties d'impression à imprimer (3) situées sur celle-ci, dans une direction d'avancement (4) et un agencement de têtes d'impression (5) disposé au-dessus de l'installation de transport (2) qui, pendant l'opération d'impression, est disposé d'une manière stationnaire relativement à l'installation de transport (2), où l'agencement de têtes d'impression (5) est formé par plusieurs têtes d'impression (6) avec respectivement plusieurs buses disposées en une rangée de buses (26), et où les rangées de buses (22) ont une largeur de zone d'impression (24) mesurée perpendiculairement à la direction d'avancement (4), par laquelle est formée une largeur de zone d'impression totale (27) de l'agencement à têtes d'impression (5) d'une manière correspondante au nombre des têtes d'impression (6), où l'agencement de têtes d'impression (5) est disposé d'une manière ajustable verticalement à un guidage (10), et une installation de rinçage de buses (14) pour le positionnement selon le besoin est réalisée sous l'agencement à têtes d'impression (5), **caractérisé en ce que** l'installation de rinçage de buses (14) présente pour chacune des rangées de têtes d'impression (26) une rangée de trémies (101), où les rangées de trémies (101) sont reliées respectivement par une conduite séparée (108) à un réservoir (13) correspondant à la couleur respective pour l'alimentation des têtes d'impression (6), où est disposé entre les rangées de trémies (101) et les réservoirs (13) respectivement une installation de nettoyage d'encre (110), et où l'installation de rinçage de buses (14) présente une autre rangée de trémies (103), où l'autre rangée de trémies (103) peut être reliée à une cuve de déchets.

2. Dispositif d'impression à jet d'encre (1) selon la revendication 1, **caractérisé en ce que** la rangée de trémies (101, 103) comprend au moins une trémie de collecte (102, 104) pour chacune des couleurs d'impression, où la trémie de collecte (102, 104) possède une face de collecte qui couvre toutes les buses d'une tête d'impression (6).

3. Dispositif d'impression à jet d'encre (1) selon la revendication 1 ou 2, **caractérisé en ce qu'**il est réalisé pour chacune des couleurs d'impression une rangée de têtes d'impression (26) s'étendant perpendiculairement à la direction d'avancement (4), où les rangées de têtes d'impression (26) sont formées par des têtes d'impression (6) disposées les unes à côté des autres, et où les rangées de têtes d'impression (26) sont disposées relativement à la direction d'avancement (4) les unes derrière les autres.

4. Dispositif d'impression à jet d'encre (1) selon la revendication 3, **caractérisé en ce que** plusieurs têtes d'impression (6) respectivement d'une des rangées de têtes d'impression (26) forme un module de têtes d'impression (25), et les rangées de têtes d'impression (26) sont formées chacune par plusieurs modules de têtes d'impression (25).

5. Dispositif d'impression à jet d'encre (1) selon l'une des revendications précédentes,
**caractérisé en ce que** les rangées de buses (22) sont disposées en biais par rapport à la direction d'avancement (4).

6. Dispositif d'impression à jet d'encre (1) selon l'une des revendications précédentes, **caractérisé en ce que** les écarts des rangées de trémies (101) relativement à la direction d'avancement (4) sont dimensionnés de telle sorte que toutes les rangées de têtes d'impression (26) peuvent être positionnées en même temps au-dessus d'une rangée de trémies (101).

7. Dispositif d'impression à jet d'encre (1) selon l'une des revendications précédentes,
**caractérisé en ce que** l'installation de rinçage de buses (14) comprend une installation de nettoyage de buses (105).

8. Dispositif d'impression à jet d'encre (1) selon la revendication 7, **caractérisé en ce que** l'installation de nettoyage de buses (105) est réalisée avec des buses d'aspiration (107) qui peuvent être positionnées en dessous des buses des têtes d'impression (6).

9. Dispositif d'impression à jet d'encre (1) selon la revendication 8, **caractérisé en ce que** les buses d'aspiration (107) sont disposées à une poutre d'aspiration (106), où les buses d'aspiration (107) sont disposées dans une rangée rectiligne qui est orientée perpendiculairement à la direction d'avancement (4), et où deux buses d'aspiration avoisinantes (107) sont disposées à un écart identique à l'écart de deux têtes d'impression avoisinantes (6) d'une rangée de têtes d'impression (26).

10. Dispositif d'impression à jet d'encre (1) selon la revendication 9, **caractérisé en ce que** la poutre d'aspiration (6) est disposée d'une manière déplaçable à l'installation de rinçage de buses (14) dans une direction perpendiculaire à la direction d'avancement (4) au moins selon l'étendue de l'écart de deux têtes d'impression avoisinantes (6).

11. Dispositif d'impression à jet d'encre (1) selon la revendication 9 ou 10, **caractérisé en ce que** la poutre d'aspiration (6) est réalisée avec un tenon d'entraînement respectivement un rouleau d'entraînement (112) pour l'engagement dans un chemin de guidage des rangées de têtes d'impression (26), où les chemins de guidage sont orientés parallèlement aux rangées de buses (22).

12. Dispositif d'impression à jet d'encre (1) selon la revendication 7, **caractérisé en ce que** l'installation de nettoyage de buses (105) est formée par une installation d'essuyage, qui comprend une bande passant sur un rouleau de renvoi et imbibée d'un produit de nettoyage.

13. Dispositif d'impression à jet d'encre (1) selon l'une des revendications précédentes,
**caractérisé en ce que** l'installation de transport (2) est formée par une bande de convoyage (7).

14. Dispositif d'impression à jet d'encre (1) selon la revendication 13, **caractérisé en ce que** l'installation de transport (2) comprend une plaque de guidage (9) sur laquelle est guidée une section supérieure de la bande de convoyage (7) déplacée dans la direction d'avancement (4).

15. Dispositif d'impression à jet d'encre (1) selon la revendication 13 ou 14, **caractérisé en ce qu'**une installation de nettoyage (15) est disposée pour le nettoyage de la bande de convoyage (7).

16. Dispositif d'impression à jet d'encre (1) selon l'une des revendications précédentes,
**caractérisé en ce qu'**il est disposé en amont de l'installation de transport (2) un organe de stockage intermédiaire (113), où l'organe de stockage intermédiaire (113) est réalisé pour la réception de parties d'impression (3) pendant une durée pendant laquelle la bande de convoyage (7) est arrêtée.
